# EUROPÄISCHE PATENTSCHRIFT

(11) **EP 4 289 309 B1**
(45) Veröffentlichungstag und Bekanntmachung des Hinweises auf die Patenterteilung: **26.08.2026**
(21) Anmeldenummer: 23177060.3
(22) Anmeldetag: 02.06.2023
(51) Int. Cl.: A46B 11/06, A47L 11/00, A47L 7/00, A46B 11/00, A46B 13/02, B08B 3/02, A47L 11/14, A47L 11/292, A47L 11/08, A47L 11/40, B08B 1/12, B08B 1/32

(54) **VERFAHREN UND KOMMUNIKATIONSSYSTEM ZUM GEKOPPELTEN BETRIEB EINER ELEKTRISCHEN WASCHBÜRSTE UND EINER ELEKTRISCHEN PUMPENVORRICHTUNG**
METHOD AND COMMUNICATION SYSTEM FOR THE COUPLED OPERATION OF AN ELECTRIC WASHING BRUSH AND AN ELECTRIC PUMP DEVICE
PROCÉDÉ ET SYSTÈME DE COMMUNICATION POUR FAIRE FONCTIONNER DE MANIÈRE COUPLÉE UNE BROSSE DE LAVAGE ÉLECTRIQUE ET UN DISPOSITIF DE POMPE ÉLECTRIQUE

(30) Priorität: 09.06.2022 DE 102022114570
(43) Veröffentlichungstag der Anmeldung: 13.12.2023
(73) Patentinhaber: Einhell Germany AG, 94405 Landau / Isar (DE)
(72) Erfinder: MAYR, Stefan, 94405 Landau/Isar (DE)
(74) Vertreter: Hofstetter, Schurack & Partner

(56) Entgegenhaltungen:
- WO-A1-2018/022753
- DE-A1- 102012 003 073
- US-A1- 2020 019 134

## Beschreibung

Die vorliegende Erfindung betrifft ein Verfahren und ein Kommunikationssystem zum gekoppelten Betrieb einer elektrischen Waschbürste, die mittels eines ersten Akkupacks elektrisch betreibbar und mit Waschflüssigkeit versorgbar ist, und einer elektrischen Pumpenvorrichtung zur Versorgung der Waschbürste mit der Waschflüssigkeit, wobei die Pumpenvorrichtung mittels eines zweiten Akkupacks elektrisch betreibbar ist.

Beim Betrieb einer elektrischen Waschbürste, die von einer elektrischen Pumpe mit Wasser versorgt werden kann, kann es unter Umständen wünschenswert sein, dass die Pumpe sich dem jeweiligen Betrieb der elektrischen Waschbürste anpasst, um stets den richtigen Druck oder die richtige Menge an Wasser bereitzustellen. Eine eingeschaltete Pumpe stellt einen Wasserdruck bereit, der unter Umständen nicht benötigt wird. Somit verbraucht die Pumpe unnötig Leistung und verschleißt schneller.

Aus US 2020/019134A1 ist ein Verfahren und Systeme für ein Elektrowerkzeug zur Steuerung eines Staubsaugers bekannt. Als Reaktion auf eine Aktivierungseingabe steuert das Elektrowerkzeug einen Motor für den Betrieb des Elektrowerkzeugs und überträgt drahtlos ein Steuersignal an den Staubsauger. Als Reaktion auf den Empfang des Steuersignals steuert der Staubsauger einen Motor für den Betrieb des Staubsaugers. Das Elektrowerkzeug, der Staubsauger oder beide enthalten eine drahtlose Kommunikationsverbindung, um das Elektrowerkzeug und den Staubsauger zu koppeln. Das Elektrowerkzeug und/oder der Staubsauger können kabellos sein und von einem Akkupack betrieben werden.

Des Weiteren ist aus DE 10 2012 003073 eine Erfindung bekannt, die ein Sauggerät zum Absondern von Partikeln aus einem Saugstrom betrifft, mit einem Saugmotor zum Erzeugen des Saugstroms und mit einem Saugergehäuse, in dem der Saugmotor und ein Staubsammelraum zum Sammeln der aus dem Saugstrom abgesonderten Partikel angeordnet ist, wobei das Sauggerät zum Absaugen von beim Betrieb einer einen Antriebsmotor zum Antreiben eines Werkzeugs aufweisenden Hand-Werkzeugmaschine, vorgesehen ist. Bei dem Sauggerät ist vorgesehen, dass es eine Sauggerät-Kommunikationseinrichtung zur leitungslosen Kommunikation mit einer in einem Abstand zu dem Saugergehäuse im Zusammenhang mit der Hand-Werkzeugmaschine zu betreibenden Extern-Kommunikationseinrichtung aufweist, wobei die Sauggerät-Kommunikationseinrichtung einen Sauggerät-Empfänger zum Empfang mindestens eines durch die Extern-Kommunikationseinrichtung gesendeten, leitungslosen Steuersignals und/oder Meldesignals und/oder einen Sauggerät-Sender zum Senden mindestens eines leitungslosen Steuersignals und/oder Meldesignals an die Extern-Kommunikationseinrichtung aufweist.

Außerdem ist aus WO 2018/022753 eine tragbare Schaumbürste bekannt, die einen Seifenbehälter, beispielsweise wahlweise in einer Basis oder in einem Stab, eine Schaumkammer und einen Luftkompressor, beispielsweise wahlweise einen batteriebetriebenen Luftkompressor umfasst. Der Luftkompressor ist so konfiguriert, dass er Luft zuführt, die auf die Seife aus dem Vorratsbehälter einwirkt und so die Abgabe der Seife in die Schaumkammer bewirkt. In einigen Ausführungsformen kann der Luftkompressor auch Luft in die Schaumkammer leiten. Bei der Anwendung verbinden sich die Seife und die Luft in der Schaumkammer und es entsteht ein Luft-Seifenschaum. Die Bürste weist ein Bürstenende auf, das zum Aufnehmen und Abgeben von Schaum aus der Schaumkammer konfiguriert ist.

Zwar sind bereits Pumpen bekannt, die automatisiert Wasser bereitstellen. Dieses Prinzip beruht jedoch darauf, dass druckverlustgesteuerte Pumpen einen Druckverlust in einer Druckleitung, beispielsweise durch das Öffnen eines Ventils der Druckleitung oder durch Wasserentnahme mittels der Waschbürste aus der Druckleitung, feststellen können und folglich der Betrieb der Pumpe aktiviert werden kann, um den Druck aufrecht zu halten und Wasser zu befördern. Nachteilig an diesen bekannten Pumpen ist jedoch, dass zunächst das Ventil geöffnet werden oder die Waschbürste Wasser aus der Druckleitung entnehmen muss, sodass Wasser aus der Druckleitung entweicht und erst in Folge der Druck in der Druckleitung abfällt. Wiederum erst in Folge wird die Pumpe nach Feststellung des Druckabfalls aktiviert, wonach mit einem Zeitversatz Wasser bereitgestellt werden kann. Dieser indirekte Zusammenhang zwischen der Wasserentnahme und der Versorgung mit Wasser führt zu einer unerwünschten Verzögerung, die sich insbesondere bei der Verwendung einer Waschbürste nachteilig auswirkt. Ein weiterer Nachteil der druckverlustgesteuerten Pumpen ist, dass diese stets bei einem Druckverlust aktiviert werden, auch wenn eine Aktivierung gar nicht erwünscht ist. Insbesondere bei einer Leckage der Druckleitung wird der Betrieb der druckverlustgesteuerten Pumpe unerwünschter Weise aktiv, sodass weiter Wasser aus der Leckage dringt. Ein weiterer Nachteil besteht darin, dass bei einer Fehlfunktion eines Drucksensors, der den Druckverlust feststellt, der Betrieb der druckverlustgesteuerten Pumpe dauerhaft aktiv sein kann, was zu einem erheblichen Energiebedarf und zu einem erhöhten Verschleiß der Pumpe führen kann.

Des Weiteren ist keine Pumpe bekannt, die auf unterschiedliche Betriebsarten einer elektrischen Waschbürste reagieren kann und einen entsprechenden Wasserdruck oder eine entsprechende Wassermenge für die elektrische Waschbürste bereitstellen kann. Dies beruht insbesondere auf der Tatsache, dass bekannte Pumpen unabhängig von einem Erfordernis eines entsprechenden Wasserdrucks oder einer entsprechenden Wassermenge betrieben werden.

Es ist daher Aufgabe der vorliegenden Erfindung, einen Betrieb einer elektrischen Pumpenvorrichtung anzugeben, der direkt abhängig von einem Betrieb einer elektrischen Waschbürste reagiert.

Die Aufgabe wird gelöst durch einen jeweiligen Gegenstand der unabhängigen Ansprüche. Vorteilhafte Weiterbildungen und bevorzugte Ausführungsformen sind in den Unteransprüchen beschrieben.

Gemäß einem Aspekt der Erfindung wird ein Verfahren zum gekoppelten Betrieb einer elektrischen Waschbürste, die mittels eines ersten Akkupacks elektrisch betreibbar und mit Waschflüssigkeit versorgbar ist, und einer elektrischen Pumpenvorrichtung zur Versorgung der elektrischen Waschbürste mit der Waschflüssigkeit, wobei die elektrische Pumpenvorrichtung mittels eines zweiten Akkupacks elektrisch betreibbar ist, bereitgestellt. Das Verfahren umfasst die folgenden Schritte:
- Automatisches Detektieren einer Aktivierung oder Änderung eines aktiven Betriebes der elektrischen Waschbürste;
   a) Senden eines Aktivierungssignals abhängig von der detektierten Aktivierung oder der detektierten Änderung von dem ersten Akkupack und Empfangen des Aktivierungssignals durch das zweite Akkupack; oder
   b) Senden eines Aktivierungssignals abhängig von der detektierten Aktivierung oder der detektierten Änderung von dem ersten Akkupack und Empfangen des Aktivierungssignals durch die elektrische Pumpenvorrichtung; oder
   c) Senden eines Aktivierungssignals abhängig von der detektierten Aktivierung oder der detektierten Änderung von der elektrischen Waschbürste und Empfangen des Aktivierungssignals durch das zweite Akkupack;
   und
- Automatisches Aktivieren oder automatisches Ändern eines aktiven Betriebes der elektrischen Pumpenvorrichtung abhängig von dem empfangenen Aktivierungssignal.

Die elektrische Waschbürste kann vorzugsweise zum motorisch unterstützten Reinigen von Oberflächen dienen, insbesondere von zumindest im Wesentlichen flachen Bodenflächen, entlang denen das Reinigungsgerät durch einen jeweiligen Benutzer geführt werden kann. Die elektrische Waschbürste kann einen Motorraum aufweisen, in dem ein Elektromotor angeordnet ist, sowie eine elektrisch mit dem Elektromotor verbundene Akkuaufnahme zum Aufnehmen des ersten Akkupacks, der zur elektrischen Versorgung des Elektromotors dient. An den Elektromotor kann eine drehbar antreibbare Welle zum Aufnehmen oder Halten wenigstens einer Walzenbürste zum Reinigen der Oberflächen mechanisch verbunden sein.

Weiter kann die elektrische Waschbürste einen Anschluss für einen Schlauch oder eine Leitung, insbesondere einen Wasserschlauch oder eine Wasserleitung aufweisen, wobei durch den Anschluss die Waschbürste mit Waschflüssigkeit versorgt werden kann. Die Waschflüssigkeit kann von der Waschbürste dazu verwendet werden, die Walzenbürste und/oder die zu reinigende Oberfläche, über die das Reinigungsgerät geführt werden kann, mit der Waschflüssigkeit zu befeuchten oder zu nässen. Dadurch kann ein Waschprozess erleichtert oder überhaupt erst ermöglicht werden. Insbesondere kann die elektrische Waschbürste über ein steuer- und regelbares Ventil verfügen, welches die Zufuhr und/oder die Menge und/oder den Druck der Waschflüssigkeit zur Walzenbürste oder zur Oberfläche einstellt. Bei der Waschflüssigkeit handelt es sich vorzugsweise um Wasser, beispielsweise um Regenwasser aus einer Regentonne oder Zisterne, oder um Wasser aus einem Gewässer, oder um mit einem Reinigungsmittel versetztes Wasser.

Die elektrische Pumpenvorrichtung kann vorzugsweise zum motorischen Fördern bzw. Befördern der Waschflüssigkeit dienen. Die elektrische Pumpenvorrichtung kann eine elektrisch antreibbare Pumpe, sowie eine elektrisch mit der Pumpe verbundene Akkuaufnahme zum Aufnehmen des zweiten Akkupacks aufweisen, der zur elektrischen Versorgung der Pumpe dient. Die Pumpe kann insbesondere einen Elektromotor umfassen, der insbesondere mit einem Laufrad zur Förderung der Waschflüssigkeit über eine rotierbare Welle verbunden sein kann.

Weiter kann die elektrische Pumpenvorrichtung einen Anschluss für einen weiteren Schlauch oder eine weitere Leitung aufweisen, wobei durch den Anschluss die Waschflüssigkeit befördert und bereitgestellt werden kann. Die elektrische Pumpenvorrichtung ist insbesondere dazu ausgebildet, die Waschflüssigkeit, beispielsweise aus einem Reservoir, insbesondere einer Regentonne, einer Zisterne, einem Teich oder einem sonstigen Gewässer, durch den angeschlossenen Schlauch bzw. die angeschlossene Leitung zu fördern. Insbesondere kann sich eine Pumpe der Pumpenvorrichtung innerhalb des Reservoirs quasi unter Wasser befinden oder außerhalb des Reservoirs über einen weiteren Schlauch mit dem Reservoir verbunden sein. Insbesondere kann die geförderte Waschflüssigkeit in einer gewissen Menge, beispielsweise angegeben in Liter pro Stunde, und unter einem gewissen Druck bereitgestellt werden. Bei der elektrischen Pumpenvorrichtung kann es sich beispielsweise um eine Tauchpumpe, eine Hebeanlage oder um eine Pumpstation handeln.

Bei der Durchführung des erfindungsgemäßen Verfahrens ist der Anschluss der Pumpenvorrichtung über den Schlauch oder über die Leitung mit dem Anschluss der elektrischen Waschbürste verbunden, sodass die elektrische Waschbürste von der elektrischen Pumpenvorrichtung mit Waschflüssigkeit versorgt werden kann.

Dass die elektrische Waschbürste und die elektrische Pumpenvorrichtung jeweils mittels des ersten bzw. zweiten Akkupacks betreibbar sind, kann derart verstanden werden, dass diese jeweils mit dem jeweiligen Akkupack verbindbar sind und durch das entsprechende Akkupack mit elektrischer Energie versorgt werden können. Bei der Durchführung des erfindungsgemäßen Verfahrens sind die elektrische Waschbürste mit dem ersten Akkupack und die elektrische Pumpenvorrichtung mit dem zweiten Akkupack verbunden.

Wird der aktive Betrieb der elektrischen Waschbürste aktiviert, so kann dies derart verstanden werden, dass sich die elektrische Waschbürste zunächst nicht in dem aktiven Betrieb befindet und dann entsprechend in den aktiven Betrieb gebracht wird. Beispielsweise befindet sich die elektrische Waschbürste vor der Aktivierung in einem Ruhemodus oder in einem deaktivierten bzw. inaktiven Betrieb. Insbesondere steht die drehbare Walzenbürste vor der Aktivierung still und/oder ist das Ventil geschlossen, sodass eine Zufuhr von Waschflüssigkeit unterbunden ist.

Im aktiven Betrieb der elektrischen Waschbürste kann sich die Walzenbürste drehen und/oder das Ventil in einer bestimmten Ventilstellung geöffnet sein, sodass Waschflüssigkeit zugeführt werden kann.

Wird der aktive Betrieb der elektrischen Waschbürste verändert, so kann dies beispielsweise einer Veränderung eines oder mehrerer Betriebsparameter des Betriebes der elektrischen Waschbürste entsprechen. Diese Betriebsparameter können beispielsweise beinhalten: Eine Rotationsgeschwindigkeit, ein Drehmoment der Walzenbürste und/oder die Ventilstellung zur Regelung der Menge oder des Druckes der Waschflüssigkeit.

Die Aktivierung oder Änderung des aktiven Betriebes der elektrischen Waschbürste kann im Allgemeinen manuell initiiert werden, beispielsweise durch die Betätigung eines oder mehrerer Bedienelemente der elektrischen Waschbürste zur manuellen Bedienung, beispielsweise eines Hebels, Schalters, Reglers oder dergleichen, durch einen Benutzer. Die Aktivierung oder Änderung des aktiven Betriebes der elektrischen Waschbürste kann beispielsweise durch einen Sensorschaltkreis der Waschbürste detektiert werden, indem eine Betätigung des Bedienelements detektiert wird. Alternativ oder zusätzlich kann die Aktivierung des aktiven Betriebes der elektrischen Waschbürste auch dadurch detektiert werden, dass eine Abgabe elektrischer Energie von dem ersten Akkupack an die elektrische Waschbürste detektiert wird. Die Detektion kann dabei also durch den ersten Akkupack allein erfolgen oder durch die Erfassung entsprechender Sensorsignale mittels des ersten Akkupacks, wobei der Sensorschaltkreis, der die Aktivierung oder die Änderung erfasst und der das Sensorsignal abhängig von der Aktivierung oder Änderung erzeugt, innerhalb des ersten Akkupacks angeordnet sein kann, sich jedoch auch außerhalb des ersten Akkupacks, insbesondere in der elektrischen Waschbürste, befinden kann. Das Sensorsignal kann beispielsweise über die elektrische Verbindung des ersten Akkupacks mit der elektrischen Waschbürste übermittelt werden.

Insbesondere kann das Sensorsignal von einer Steuereinheit des ersten Akkupacks oder der elektrischen Waschbürste weiterverarbeitet werden. Insbesondere ist der Sensorschaltkreis direkt oder über die Steuereinheit mit einer ersten Kommunikationsschnittstelle des ersten Akkupacks oder der elektrischen Waschbürste verbunden. Die erste Kommunikationsschnittstelle ist insbesondere dazu ausgebildet, das Aktivierungssignal zu senden.

Das Aktivierungssignal kann insbesondere durch eine zweite Kommunikationsschnittstelle des zweiten Akkupacks oder der elektrischen Pumpenvorrichtung, indirekt oder direkt, empfangen werden.

Der aktive Betrieb der elektrischen Pumpenvorrichtung kann als solcher verstanden werden, in dem die elektrische Pumpenvorrichtung die Waschflüssigkeit fördert. Dabei wird die Pumpe insbesondere durch das zweite Akkupack mit elektrischer Energie versorgt.

Die Aktivierung oder Änderung des aktiven Betriebes der elektrischen Pumpenvorrichtung erfolgt automatisch, also ohne dass hierzu ein Tätigwerden eines Benutzers erforderlich ist. Bei der Aktivierung wird vorzugsweise der Elektromotor der elektrischen Pumpenvorrichtung mit Energie versorgt, sodass die Waschflüssigkeit gefördert und somit die elektrische Waschbürste versorgt wird. Bei einer Änderung des aktiven Betriebes kann beispielsweise eine Drehzahl des Elektromotors geändert werden, sodass beispielsweise eine Menge oder ein Druck der geförderten Waschflüssigkeit geändert werden kann.

Die Änderung des aktiven Betriebes der elektrischen Pumpenvorrichtung ist insbesondere an die Änderung des aktiven Betriebes der elektrischen Waschbürste angepasst. Beispielsweise wird die Waschbürste mit genau demjenigen Druck und/oder derjenigen Menge an Waschflüssigkeit durch die elektrische Pumpenvorrichtung versorgt, den die elektrische Waschbürste in ihrem aktiven Betrieb benötigt.

Insbesondere erfolgt die Aktivierung des aktiven Betriebes der elektrischen Pumpenvorrichtung direkt und automatisch auf die Aktivierung des aktiven Betriebes der elektrischen Waschbürste. Insbesondere erfolgt die spezifische Änderung des aktiven Betriebes der elektrischen Pumpenvorrichtung direkt und automatisch auf die spezifische Änderung des aktiven Betriebes der elektrischen Waschbürste.

Im aktiven Betrieb der elektrischen Waschbürste und der elektrischen Pumpenvorrichtung ist jeweils ein Akkugehäuse des entsprechenden Akkupacks insbesondere mit dem einer jeweiligen Aufnahme der elektrischen Waschbürste bzw. der elektrischen Pumpenvorrichtung gekoppelt beziehungsweise an dieser befestigt. Das jeweilige Akkupack ist dabei lösbar, insbesondere zerstörungsfrei lösbar, mit der Aufnahme der elektrischen Waschbürste und der elektrischen Pumpenvorrichtung verbunden, beispielsweise über eine Rastverbindung, eine Steckverbindung und/oder eine Klemmverbindung. Insbesondere kann die mechanische Verbindung des jeweiligen Akkupacks mit der Aufnahme als formschlüssige und/oder kraftschlüssige Verbindung ausgestaltet sein, ohne dass eine stoffschlüssige Verbindung vorliegt. Mit anderen Worten kann die mechanische Verbindung des jeweiligen Akkupacks mit der Aufnahme des Elektrogeräts gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden. Mit anderen Worten ist das Akkupack als Wechsel-Akkupack, insbesondere System-Akkupack ausgestaltet. Zur elektrischen und mechanischen Verbindung kann das Gehäuse des Akkupacks und der Aufnahme jeweilige Schnittstellen aufweisen.

Die elektrische Verbindung kann beispielsweise über einen oder mehrere Steckkontakte, insbesondere sogenannte Tulpenkontakte oder Schwertkontakte, erfolgen. Beispielsweise können an den Schnittstellen der entsprechenden Gehäuse jeweils zueinander kompatible Stecker oder Buchsen beziehungsweise Aufnahmen oder dergleichen vorgesehen sein, um die elektrische Verbindung des Akkupacks mit dem Elektrogerät zu erzielen.

Der gekoppelte Betrieb der elektrischen Waschbürste und der elektrischen Pumpenvorrichtung zur Versorgung der Waschbürste mit der Waschflüssigkeit hat zum einen den Vorteil, dass die Waschflüssigkeit genau dann bereitgestellt wird, wenn diese auch durch die elektrische Waschbürste benötigt wird. Wenn keine Waschflüssigkeit benötigt wird, wird ebenso keine Waschflüssigkeit bereitgestellt. Des Weiteren kann genau diejenige Menge bzw. derjenige Druck an Waschflüssigkeit durch die elektrische Pumpenvorrichtung bereitgestellt werden, der durch die elektrische Waschbürste benötigt wird. Somit wird die elektrische Pumpenvorrichtung nicht unnötig betrieben, sodass diese geschont werden kann. Dadurch kann insbesondere ein Verschleiß der Pumpenvorrichtung verringert beziehungsweise eine Lebensdauer der Pumpenvorrichtung erhöht werden. Zum anderen wird die Waschflüssigkeit effizient genutzt, da nicht zu viel Druck oder eine zu große Menge Waschflüssigkeit bereitgestellt wird.

Ein weiterer Vorteil ist, dass lediglich der aktive Betrieb der Waschbürste, die ohne zur Reinigung einer Oberfläche durch den Benutzer bedient wird, aktiviert oder geändert werden muss, wobei sich die Pumpenvorrichtung automatisch dieser Aktivierung oder Änderung anpasst und der Benutzer nicht direkt auf diese einwirken muss. Somit wird die Bedienung der Waschbürste erheblich vereinfacht. Ein weiterer Vorteil besteht darin, dass der Betrieb der Pumpenvorrichtung direkt an den Betrieb der Waschbürste gekoppelt ist, sodass die Versorgung der Waschbürste mit Waschflüssigkeit durch die Pumpenvorrichtung ohne Zeitversatz bereitgestellt werden kann. Die direkte Abhängigkeit des Betriebes der Pumpenvorrichtung an den Betrieb der Waschbürste bietet des Weiteren den Vorteil, dass die Pumpenvorrichtung nicht unerwünscht automatisch betrieben werden kann, sondern lediglich im Betrieb der Waschbürste.

Vorzugsweise ist vorgesehen, dass das Aktivierungssignal Informationen über die elektrische Waschbürste und/oder Informationen über den ersten Akkupack enthält. Diese Informationen können beispielsweise der Identifikation der elektrischen Waschbürste und/oder des ersten Akkupacks dienen, sodass das Aktivierungssignal eindeutig einem Absender zugeordnet werden kann. Des Weiteren kann das Aktivierungssignal Informationen über die Aktivierung des aktiven Betriebes oder den geänderten, aktiven Betrieb der elektrischen Waschbürste enthalten, insbesondere über die benötigte Menge bzw. den benötigten Druck an Waschflüssigkeit.

Durch das Aktivierungssignal, welches die besagten Informationen enthält, kann die elektrische Pumpenvorrichtung bzw. der zweite Akkupack vorteilhaft das Aktivierungssignal eindeutig zuordnen und somit entsprechend den aktivierten Betrieb automatisch aktivieren oder ändern.

Vorzugsweise ist vorgesehen, dass basierend auf den Informationen über die elektrische Waschbürste und/oder Informationen über den ersten Akkupack des empfangenen Aktivierungssignals ein Zuordnungskriterium überprüft wird, ob das erste Akkupack und/oder die elektrische Waschbürste dem zweiten Akkupack und/oder der elektrischen Pumpvorrichtung zugeordnet ist.

Wenn das Aktivierungssignal übermittelt wurde und insbesondere nachdem das Aktivierungssignal übermittelt wurde, kann vorzugsweise mittels einer Steuereinheit des zweiten Akkupacks oder der elektrischen Pumpenvorrichtung überprüft werden, ob das erste Akkupack und/oder das erste Elektrogerät dem zweiten Akkupack und/oder dem zweiten Elektrogerät gemäß des vorgegebenen Zuordnungskriteriums zugeordnet ist. Dies ist insbesondere dann von Vorteil, wenn das erste Akkupack bzw. die elektrische Waschbürste nicht bzw. noch nicht an das zweite Akkupack bzw. die elektrische Pumpenvorrichtung gekoppelt ist. Dies kann beispielsweise der Fall sein, wenn ein erstmaliges Aktivieren oder ein erstes Aktivieren nach einem definierten Zeitraum erfolgt.

Das Zuordnungskriterium ist, dass das erste Akkupack und/oder die elektrische Waschbürste dem zweiten Akkupack und/oder der elektrischen Pumpvorrichtung zugeordnet ist. Eine Zuordnung kann bereits dann gegeben sein, wenn sich die jeweiligen Akkupacks bzw. die Waschbürste und die Pumpenvorrichtung für einen gekoppelten Betrieb eignen. Dies kann insbesondere für einen Betrieb einer elektrischen Waschbürste und einer elektrischen Pumpenvorrichtung gegeben sein. Insbesondere erfolgt diese Kopplung dann automatisch.

Vorzugsweise kann ein Zuordnungskriterium auch dadurch gegeben sein, dass im Vorfeld bereits eine Kopplung gegeben war und diese entsprechend gespeichert wurde, vorzugsweise auf der Speichereinheit des zweiten Akkupacks oder der elektrischen Pumpenvorrichtung. Insbesondere kann ein Benutzer eine Zuordnung auf geeignete Weise festlegen, beispielsweise über Betätigungselemente der elektrischen Waschbürste, der elektrischen Pumpenvorrichtung oder des ersten oder zweiten Akkupacks, oder beispielsweise über eine Benutzeroberfläche auf einer externen Bedienvorrichtung. Die Zuordnung kann auch von weiteren Bedingungen abhängen, die beispielsweise auch die räumliche Position der elektrischen Waschbürste zur elektrischen Pumpenvorrichtung und so weiter beinhalten kann.

Durch diesen Verfahrensschritt kann vorteilhaft sichergestellt werden, dass die elektrische Pumpenvorrichtung der elektrischen Waschbürste zugeordnet ist. Dadurch kann die Versorgung der Waschbürste mit Waschwasser vorteilhaft sichergestellt werden.

Vorzugsweise ist vorgesehen, dass der aktive Betrieb der elektrischen Pumpenvorrichtung nur dann aktiviert oder geändert wird, wenn als Ergebnis der Überprüfung festgestellt wird, dass das Zuordnungskriterium erfüllt ist.

Dadurch wird also erreicht, dass die Aktivierung oder Veränderung des aktiven Betriebes der elektrischen Pumpenvorrichtung bei der Aktivierung der elektrischen Waschbürste nur unter bestimmten, durch die Zuordnung spezifizierten, Bedingungen erfolgt, sodass ein selektiverer, gekoppelter Betrieb möglich wird. Vorteilhaft kann damit erreicht werden, dass ein Aktivierungssignal eines weiteren elektrischen Gerätes, das der elektrischen Pumpenvorrichtung nicht zugeordnet ist, zu einer Aktivierung oder Änderung des Betriebes der elektrischen Pumpenvorrichtung führen kann. Somit kann vorteilhaft ein zuverlässiger und sicherer, gekoppelter Betrieb sichergestellt werden.

Vorzugsweise findet die Überprüfung des Zuordnungskriteriums und die davon abhängige Aktivierung oder Änderung des Betriebes der elektrischen Pumpenvorrichtung lediglich dann statt, wenn noch keine signaltechnische Kopplung vorliegt.

Andernfalls ist vorzugsweise vorgesehen, dass der aktive Betrieb der Pumpenvorrichtung nur dann aktiviert oder geändert wird, wenn das erste Akkupack durch eine signaltechnische Kopplung mit dem zweiten Akkupack und/oder der elektrischen Pumpenvorrichtung zugeordnet ist, oder wenn die elektrische Waschbürste durch eine signaltechnische Kopplung mit dem zweiten Akkupack und/oder der elektrischen Pumpenvorrichtung zugeordnet ist.

Bei einer signaltechnischen Kopplung kann es sich um eine direkte Kopplung, beispielsweise um eine Bluetooth-Verbindung oder eine Verbindung mittels eines anderen Funkstandards, oder eine indirekte Kopplung, beispielsweise über eine Netzwerkschnittstelle, handeln. Entsprechend kann das Aktivierungssignal über die signaltechnische Kopplung gesendet und empfangen werden, sodass vorzugsweise die Überprüfung eines Zuordnungskriteriums nicht erforderlich sein kann. Somit kann vorteilhaft ein zuverlässiger und sicherer, gekoppelter Betrieb sichergestellt werden.

Vorzugsweise ist vorgesehen, dass das Aktivierungssignal über eine drahtlose und direkte Kommunikationsverbindung an das zweite Akkupack oder die elektrische Pumpenvorrichtung gesendet wird.

Beispielsweise handelt es sich bei dem Aktivierungssignal um ein Funksignal einer direkten signaltechnischen Kopplung, also beispielsweise um ein Funksignal einer Bluetooth-Verbindung. Unter der direkten Kommunikationsverbindung kann insbesondere eine Punkt-zu-Punkt-Verbindung verstanden werden. Hierdurch ergibt sich der Vorteil, dass keine externen Schnittstellen benötigt werden, sodass das Senden des Aktivierungssignals schnell und zuverlässig erfolgen kann.

Alternativ kann es vorzugsweise vorgesehen sein, dass das Aktivierungssignal über eine drahtlose und indirekte Kommunikationsverbindung an das zweite Akkupack oder die elektrische Pumpenvorrichtung gesendet wird, wobei die indirekte Kommunikationsverbindung über ein lokales Netzwerk oder eine externe Servercomputereinheit hergestellt wird. Als extern wird insbesondere eine Servercomputereinheit bezeichnet, die extern von den Akkupacks und extern von der elektrischen Waschbürste und der elektrischen Pumpenvorrichtung ist.

Bei einem lokalen Netzwerk kann es sich beispielsweise um ein WLAN-Netzwerk handeln, in welchem das erste Akkupack und/oder die elektrische Waschbürste, und das zweite Akkupack und/oder die elektrische Pumpenvorrichtung angemeldet sind, wobei das Aktivierungssignal über einen Netzwerkrouter des WLAN-Netzwerks versendet werden kann. Die indirekte Kommunikationsverbindung kann alternativ über eine externe Servercomputereinheit hergestellt sein. Die Verbindung mit der externen Servercomputereinheit kann beispielsweise über das Internet mittels Mobilfunk oder mittels des Netzwerkrouters erfolgen. Eine indirekte Kommunikationsverbindung kann dahingehend vorteilhaft sein, dass eine Reichweite, in der das Aktivierungssignal gesendet und empfangen werden kann, größer sein kann also bei einer direkten Kommunikationsverbindung. So kann die elektrische Pumpenvorrichtung unabhängig von einer Position der elektrischen Waschbürste positioniert sein.

Ein weiterer Vorteil kann darin bestehen, dass über den Netzwerkrouter oder die externe Servercomputereinheit weitere Dienste für den Benutzer bereitgestellt werden können, beispielsweise in einer Applikation auf einem Computer oder einem mobilen Endgerät. Hier können beispielsweise Zuordnungskriterien durch den Benutzer definiert werden.

Vorzugsweise ist vorgesehen, dass die Aktivierung oder die Änderung des aktiven Betriebes der elektrischen Waschbürste durch eine Benutzereingabe initiiert wird.

Das Aktivierungssignal wird in Reaktion auf die erfasste Benutzereingabe übermittelt, also insbesondere nur, wenn die Benutzereingabe erfolgt und erfasst wurde, oder der aktive Betrieb der elektrischen Waschbürste wird nur dann aktiviert oder verändert, wenn die Benutzereingabe erfasst wurde.

Beispielsweise kann im letzteren Fall die Information, dass die Benutzereingabe erfasst wurde, als Teil der Informationen des Aktivierungssignals übermittelt werden.

Erfasst das zweite Akkupack oder die elektrische Pumpenvorrichtung die Benutzereingabe, so kann das zweite Akkupack oder das zweite Elektrogerät eine entsprechende Information an das erste Akkupack oder das erste Elektrogerät übermitteln, welches dann entsprechend nach der Aktivierung des ersten Elektrogeräts die Aktivierungsinformation wie beschrieben übermitteln kann.

Die Benutzereingabe kann beispielsweise durch die Betätigung entsprechender Knöpfe, Tasten, berührungsempfindlicher Displays oder auch über eine Spracheingabe erfasst werden.

Vorzugsweise ist vorgesehen, dass eine Deaktivierung des aktiven Betriebes der elektrischen Waschbürste automatisch erfasst wird und ein Deaktivierungssignal abhängig von der detektierten Deaktivierung von dem ersten Akkupack oder von der elektrischen Waschbürste gesendet wird, wobei das zweite Akkupack oder die elektrische Pumpenvorrichtung das Deaktivierungssignal empfängt und abhängig von dem empfangenen Deaktivierungssignal den aktiven Betrieb der elektrischen Pumpenvorrichtung nach einer vorgebbaren Zeitspanne automatisch deaktiviert.

Die Deaktivierung des aktiven Betriebes der elektrischen Waschbürste kann beispielsweise durch das Loslassen eines der Betätigungselemente initiiert werden oder durch ein aktives Stellen eines der Betätigungselemente in eine Aus-Stellung. Die Deaktivierung kann auch dadurch initiiert werden, dass der erste Akkupack entladen ist, oder der erste Akkupack und/oder die elektrische Waschbürste eine Störung aufweist, die den aktiven Betrieb unterbindet. Hieraus ergibt sich der Vorteil, dass der aktive Betrieb der elektrischen Pumpenvorrichtung nicht länger als nötig aufrecht erhalten bleibt, sodass Energie eingespart und die Pumpenvorrichtung geschont werden kann.

Vorzugsweise ist vorgesehen, dass das zweite Akkupack oder die elektrische Pumpenvorrichtung an das zugeordnete erste Akkupack oder die zugeordnete Waschbürste ein Statussignal abhängig von einem Status des zweiten Akkupacks und/oder der elektrischen Pumpenvorrichtung sendet.

Ein Status des zweiten Akkupacks kann beispielsweise ein Ladezustand sein oder eine verbleibende Nutzungszeit des zweiten Akkupacks. Des Weiteren kann der Status des zweiten Akkupacks ein Fehlerstatus basierend auf einer Störung des zweiten Akkupacks sein. Ein Status der elektrischen Pumpenvorrichtung kann insbesondere ein Betriebsstatus sein, beispielsweise eine relative Leistung gegenüber einer maximalen Leistung, oder ein Fehlerstatus oder dergleichen.

Vorzugsweise kann das Statussignal für den Benutzer in geeigneter Weise ausgegeben werden, beispielsweise an einem Display der Waschbürste, auf einem mobilen Endgerät oder durch eine LED der Waschbürste oder dergleichen. Somit kann vorteilhaft der Benutzer über den Status des zweiten Akkupacks und/oder der elektrischen Pumpenvorrichtung informiert werden.

Gemäß einem weiteren Aspekt der Erfindung wird auch ein Kommunikationssystem, das dazu eingerichtet ist, eine elektrische Waschbürste, die mittels eines ersten Akkupacks elektrisch betreibbar und mit Waschflüssigkeit versorgbar ist, und einer elektrischen Pumpenvorrichtung zur Versorgung der elektrischen Waschbürste mit der Waschflüssigkeit, wobei die elektrische Pumpenvorrichtung mittels eines zweiten Akkupacks elektrisch betreibbar ist, gekoppelt zu betreiben, bereitgestellt.

Das Kommunikationssystem weist einen Sensorschaltkreis für das erste Akkupack oder für die elektrische Waschbürste auf. Der Sensorschaltkreis ist dazu eingerichtet, eine Aktivierung oder Änderung eines aktiven Betriebes der elektrischen Waschbürste automatisch zu detektieren.

Das Kommunikationssystem weist weiterhin
a) eine erste Kommunikationsschnittstelle für das erste Akkupack auf, wobei die erste Kommunikationsschnittstelle mit dem Sensorschaltkreis verbunden und dazu eingerichtet ist, abhängig von einer Detektion der Aktivierung oder Änderung ein Aktivierungssignal zu senden. Die Kommunikationsschnittstelle weist weiterhin eine zweite Kommunikationsschnittstelle für das zweite Akkupack auf, wobei die zweite Kommunikationsschnittstelle dazu eingerichtet ist, das Aktivierungssignal zu empfangen; oder
b) eine erste Kommunikationsschnittstelle für das erste Akkupack auf, wobei die erste Kommunikationsschnittstelle mit dem Sensorschaltkreis verbunden und dazu eingerichtet ist, abhängig von einer Detektion der Aktivierung oder Änderung ein Aktivierungssignal zu senden. Die Kommunikationsschnittstelle weist weiterhin eine zweite Kommunikationsschnittstelle für die elektrische Pumpenvorrichtung auf, wobei die zweite Kommunikationsschnittstelle dazu eingerichtet ist, das Aktivierungssignal zu empfangen; oder
c) eine erste Kommunikationsschnittstelle für die elektrische Waschbürste auf, wobei die erste Kommunikationsschnittstelle mit dem Sensorschaltkreis verbunden und dazu eingerichtet ist, abhängig von einer Detektion der Aktivierung oder Änderung ein Aktivierungssignal zu senden. Die Kommunikationsschnittstelle weist weiterhin eine zweite Kommunikationsschnittstelle für das zweite Akkupack auf, wobei die zweite Kommunikationsschnittstelle dazu eingerichtet ist, das Aktivierungssignal zu empfangen.

Die Kommunikationsschnittstelle weist weiterhin eine Steuereinheit für das zweite Akkupack oder für die elektrische Pumpenvorrichtung auf, die mit der zweiten Kommunikationsschnittstelle verbunden und dazu eingerichtet ist, einen aktiven Betrieb der elektrischen Pumpenvorrichtung abhängig von dem empfangenen Aktivierungssignal automatisch zu aktivieren oder automatisch zu ändern.

Vorzugsweise ist vorgesehen, dass die zweite Kommunikationsschnittstelle dazu eingerichtet ist, das Aktivierungssignal direkt von der ersten Kommunikationsschnittstelle zu empfangen. Dies erfolgt beispielsweise über ein direktes Funksignal, wobei die erste Kommunikationsschnittstelle der Sender und die zweite Kommunikationsschnittstelle der Empfänger ist.

Vorzugsweise ist vorgesehen, dass das Kommunikationssystem einen lokalen Netzwerkrouter oder eine Servercomputereinheit aufweist, wobei der lokale Netzwerkrouter oder die Servercomputereinheit dazu eingerichtet ist, das Aktivierungssignal von der ersten Kommunikationsschnittstelle zu empfangen, und das Aktivierungssignal an die zweite Kommunikationsschnittstelle zu senden. Die Servercomputereinheit kann auch als Cloud-Recheneinheit bezeichnet werden.

Vorzugsweise ist vorgesehen, dass die Kommunikationsvorrichtung eine erste Speichereinheit für das erste Akkupack oder für die elektrische Waschbürste aufweist, die Informationen über den ersten Akkupack und/oder die elektrische Waschbürste speichert.

Insbesondere kann der erste Akkupack die elektrische Waschbürste erkennen, wenn diese miteinander verbunden werden, sodass diese Information auf der ersten Speicherkarte gespeichert wird. Insbesondere kann die elektrische Waschbürste den ersten Akkupack erkennen, wenn diese miteinander verbunden werden, sodass diese Information auf der ersten Speicherkarte gespeichert wird.

Insbesondere kann auch vorgesehen sein, dass die erste Speichereinheit Informationen über den zweiten Akkupack oder die elektrische Pumpenvorrichtung speichert. Dies ist insbesondere dann der Fall, wenn bereits schon einmal zuvor eine signaltechnische Kopplung bestanden hat. Dadurch kann für jeden weiteren gekoppelten Betrieb die Zuordnung vereinfacht sichergestellt werden.

Vorzugsweise ist vorgesehen, dass die Kommunikationsvorrichtung eine zweite Speichereinheit für das zweite Akkupack oder für die elektrische Pumpeneinrichtung aufweist, wobei die zweite Speichereinheit Informationen über den ersten Akkupack und/oder die elektrische Waschbürste speichert.

Weitere Ausführungsformen des erfindungsgemäßen Kommunikationssystems folgen direkt aus den verschiedenen Ausgestaltungsformen des erfindungsgemäßen Verfahrens und umgekehrt. Insbesondere kann ein Kommunikationssystem gemäß der Erfindung zur Ausführung eines erfindungsgemäßen Verfahrens eingerichtet sein oder ein solches Verfahren ausführen.

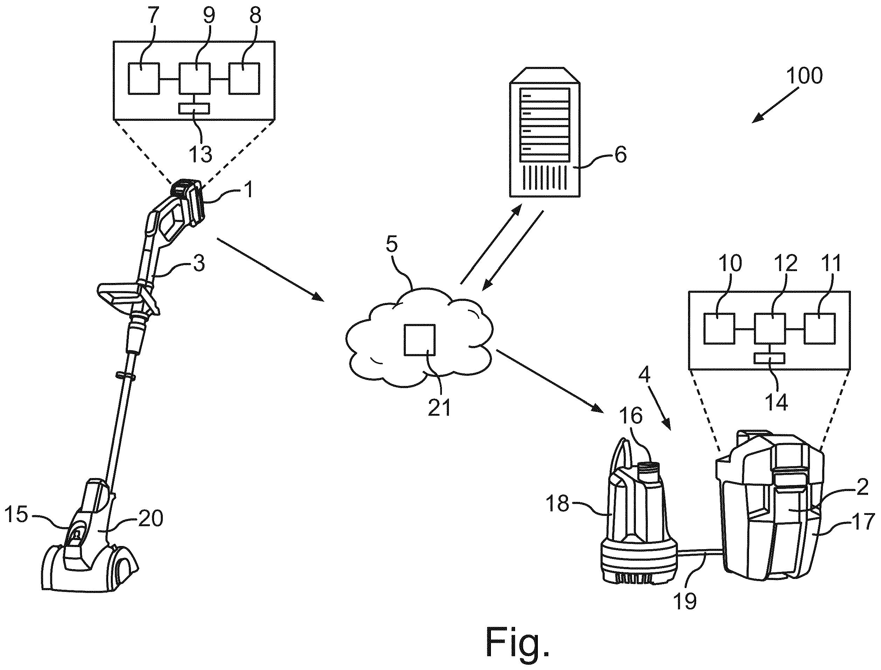

Weitere Merkmale der Erfindung ergeben sich aus den Ansprüchen, der Figur und der Figurenbeschreibung. Die vorstehend in der Beschreibung genannten Merkmale und Merkmalskombinationen sowie die nachfolgend in der Figurenbeschreibung genannten und/oder in der Figur gezeigten Merkmale und Merkmalskombinationen können nicht nur in der jeweils angegebenen Kombination, sondern auch in anderen Kombinationen von der Erfindung umfasst sein. Es sind insbesondere auch Ausführungen und Merkmalskombinationen von der Erfindung umfasst, die nicht alle Merkmale eines ursprünglich formulierten Anspruchs aufweisen. Es sind darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert.

Dabei zeigt die Fig. eine schematische Darstellung einer beispielhaften Ausführungsform eines erfindungsgemäßen Kommunikationssystems.

In dem in der Fig. gezeigten Beispiel umfasst das Kommunikationssystem 100 zumindest einen ersten Akkupack 1 und einen zweiten Akkupack 2, die jeweils wenigstens eine Akkumulatorzelle enthalten. Das Kommunikationssystem 100 kann ferner eine elektrische Waschbürste 3 mit dem ersten Akkupack 1 umfassen, sowie eine Pumpenvorrichtung 4 mit dem zweiten Akkupack 4. Die Pumpenvorrichtung 4 kann insbesondere eine Pumpe 18 zum Eintauchen in eine Regentonne, in eine Zisterne oder in ein Gewässer umfassen, sowie ein Gehäuse 17 zur Aufnahme des zweiten Akkupacks 2, wobei die Pumpe 18 und das Gehäuse 17 über ein Stromkabel 19 miteinander verbunden sein können. Ein erster Anschluss 15 zur Versorgung der Waschbürste 3 mit Waschflüssigkeit kann mit einem zweiten Anschuss 16 der Pumpenvorrichtung 4 mit einem hier nicht gezeigten Gartenschlauch oder ähnlichem verbunden sein bzw. werden.

Das Kommunikationssystem 100 umfasst beispielsweise das erste Akkupack 1 und das zweite Akkupack 2. In manchen Ausführungsformen kann das Kommunikationssystem 100 zudem eine Servercomputereinheit 6, auch als Cloud oder Internet-of-Things-Cloud beziehungsweise IoT-Cloud bezeichnet, enthalten, sowie ein lokales Netzwerk 5 mit einem Netzwerkrouter 21.

Das erste Akkupack 1 kann auf die elektrische Waschbürste 3 an einer entsprechenden Aufnahme aufgesteckt werden und zum elektrischen Versorgung eines Elektromotors 20 der Waschbürste 3 dienen. Das zweite Akkupack 2 ist insbesondere baugleich zum ersten Akkupack 1 und kann innerhalb des Gehäuses 17 an einer entsprechenden Aufnahme mit der Pumpenvorrichtung 4 verbunden werden. Der zweite Akkupack 2 kann zur elektrischen Versorgung der Pumpe 18 dienen.

Im gezeigten Beispiel weist der erste Akkupack 1 einen ersten Sensorschaltkreis 7, eine erste Kommunikationsschnittstelle 8, eine erste Steuereinheit 9, sowie eine erste Speichereinheit 13 auf, die jeweils miteinander verbunden sind, um Signale auszutauschen.

Der erste Sensorschaltkreis 7 ist dazu ausgebildet, eine Aktivierung oder Änderung eines aktiven Betriebes der elektrischen Waschbürste 3 automatisch zu detektieren, und entsprechend ein erstes Sensorsignal zu generieren. Das generierte Sensorsignal kann von der ersten Steuereinheit 9, die mit dem ersten Sensorschaltkreis 7 verbunden sein kann, empfangen und verarbeitet werden. Die erste Steuereinheit 9 kann ein Aktivierungssignal abhängig vom Sensorsignal generieren und über die erste Kommunikationsschnittstelle 8, die mit der ersten Steuereinheit 9 verbunden sein kann, versenden.

Im gezeigten Beispiel kann das Aktivierungssignal an ein lokales Netzwerk 5, vorzugsweise über eine WLAN-Verbindung an einen Netzwerkrouter 21 des lokalen Netzwerkes 5 gesendet werden. Jeweilige Sendungspfade des Aktivierungssignals werden in der gezeigten Fig. durch Pfeile dargestellt. Beispielsweise kann das Aktivierungssignal weiterverarbeitet und an eine Servercomputereinheit 6 über das Internet versendet werden. Das Aktivierungssignal kann wiederum von der Servercomputereinheit 6 weiterverarbeitet werden und über den Netzwerkrouter 21 an das zweite Akkupack 2 versendet werden. Es sind jedoch auch andere Kommunikationswege möglich, beispielsweise über eine direkte signaltechnische Kopplung des ersten Akkupacks 1 mit dem zweiten Akkupack 2, oder lediglich über das lokale Netzwerk 5.

Die Kommunikation der Waschbürste 3, der Pumpenvorrichtung 4 oder der Akkupacks 1, 2 miteinander und/oder mit der Servercomputereinheit 6 kann beispielsweise gemäß verschiedener IoT-Technologien erfolgen, beispielsweise als Carrier-Netzwerk-basierte IoT-Kommunikation oder über Lokale Distanznetzwerke. Für die Carrier-Netzwerk-basierte IoT-Kommunikation kommen zellbasierte Ansätze, wie etwa GSM, UMTS, LTE, 5G, NB-IoT, oder nicht zellbasierte Ansätze, wie etwa LoRa, ZigBee, in Frage. Als Beispiele für lokale Distanznetzwerke seien WLAN oder Bluetooth genannt.

Insbesondere kann die Servercomputereinheit 6 und/oder die zweite Steuereinheit 12 das empfangene Aktivierungssignal hinsichtlich eine Zuordnungskriteriums überprüfen und zwar, ob das erste Akkupack 1 und/oder die elektrische Waschbürste 3 dem zweiten Akkupack 2 und/oder der elektrischen Pumpvorrichtung 4 zugeordnet ist.

Im gezeigten Beispiel weist der zweite Akkupack 2 einen zweiten Sensorschaltkreis 11, eine zweite Kommunikationsschnittstelle 10, eine zweite Steuereinheit 12, sowie eine zweite Speichereinheit 14 auf, die jeweils miteinander verbunden sind, um Signale auszutauschen. Die zweite Kommunikationsschnittstelle 10 kann das Aktivierungssignal empfangen und an die zweite Steuereinheit 12 weitergeben. Abhängig von dem empfangenen Aktivierungssignal kann durch die zweite Steuereinheit 12 ein aktiver Betrieb der elektrischen Pumpenvorrichtung 4 automatisch aktiviert und geändert werden.

Um die Pumpenvorrichtung 4, insbesondere die Pumpe 18, zu aktivieren oder alternativ den aktiven Betrieb zu aktivieren, modifizieren oder anzupassen, ist das zweite Akkupack 2, insbesondere die zweite Steuereinheit 12, beispielsweise dazu in der Lage, den Hauptstrompfad zu der Pumpe 18 wahlweise ein- und auszuschalten und oder den Hauptstrompfad spannungsbasiert oder leistungsbasiert zu steuern oder zu regeln. Das zweite Akkupack 2, insbesondere die zweite Steuereinheit 12, kann auch dazu in der Lage sein, eine Stromabnahme zu erkennen und zu messen und entsprechende Messwerte für die Steuerung oder Regelung zu verwenden.

Die Akkupacks 1, 2 können beispielsweise mit dem jeweiligen Elektrogerät 3, 4 kommunizieren, um Informationen über das jeweilige Elektrogerät 3, 4, vorzugsweise über dessen Identität zu erfahren oder auszuwerten und/oder an die Servercomputereinheit 6 weiterzuleiten. Über diese Kommunikation können die Akkupacks beispielsweise auch den Betrieb des jeweiligen Elektrogeräts 3, 4 einstellen.

Die erste Speichereinheit 13 kann insbesondere Informationen über die elektrische Waschbürste 3 und/oder Informationen über den ersten Akkupack 1 enthalten, wobei diese Informationen Bestandteil des Aktivierungssignals sein können.

Die zweite Speichereinheit 14 kann insbesondere Informationen über die elektrische Pumpenvorrichtung 4 und/oder Informationen über den zweiten Akkupack 2 enthalten, wobei zusätzlich die empfangenen Informationen über die verbunden elektrische Waschbürste 3 und/oder die empfangenen Informationen über den verbunden ersten Akkupack 1 gespeichert werden können. Insbesondere können die empfangenen Informationen anhand des Zuordnungskriteriums überprüft werden, ob diese dem zweiten Akkupack 2 und/oder der Pumpenvorrichtung 4 zugeordnet sind. Die Zuordnung kann beispielsweise einer Modellierung eines Applikationsnetzwerks entsprechen. Hierfür gibt es verschiedene Möglichkeiten. Beispielsweise kann ein Pairing-Modus oder Multi-Pairing Modus realisiert werden. An einem Akkupack kann zum Beispiel ein abhängiges zweites Akkupack oder ein zweites auslösendes Akkupack registriert werden oder auch die Waschbürste einer abhängigen Pumpenvorrichtung.

Die Waschbürste 3 und/oder die Pumpenvorrichtung 4 können auch mit jeweils mehreren Akkupacks mit Energie versorgbar sein. Es ist in diesem Fall nicht notwendig, dass mehrere Akkupacks desselben Elektrogeräts an der Kommunikation zur Zuordnung beteiligt sind.

Die Registrierung der Waschbürste, der Pumpenvorrichtung oder der Akkupacks kann beispielsweise über eine Benutzerschnittstelle umgesetzt werden. Die Benutzerschnittstelle kann dabei beispielsweise Knöpfe oder Tasten, Touchscreens, Spracherkennungsschnittstellen oder Sprachwiedergabeschnittstellen und so weiter beinhalten. Ein Vorteil dabei ist, dass das Pairing etwa über WLAN oder Bluetooth einfach und kostengünstig umsetzbar ist, ohne dass zwingend eine Cloud involviert werden muss.

In komplexeren Varianten kann das Applikationsmodell in der Cloud konfiguriert werden. Hierzu kann eine Benutzerschnittstelle beispielsweise über Webformulare, Webapplikationen, mobile Applikationen oder sogenannte intelligente persönliche Assistenten implementiert werden. Zudem kann festgelegt werden welche Elektrogeräte oder Akkupacks einem bestimmten Benutzer zugeordnet sind, welche individuellen Elektrogeräte einander zugeordnet werden sind, welche Gerätetypen einander zugeordnet sind, und so weiter. Es kann somit ein Netzwerk aus miteinander kooperierenden Elektrogeräten und/oder Akkus realisiert werden.

### BEZUGSZEICHENLISTE:

- 1: erstes Akkupack
- 2: zweites Akkupack
- 3: elektrische Waschbürste
- 4: elektrische Pumpenvorrichtung
- 5: lokales Netzwerk
- 6: externe Servercomputereinheit
- 7: erster Sensorschaltkreis
- 8: erste Kommunikationsschnittstelle
- 9: erste Steuereinheit
- 10: zweiten Kommunikationsschnittstelle
- 11: zweiter Sensorschaltkreis
- 12: zweite Steuereinheit
- 13: erste Speichereinheit
- 14: zweite Speichereinheit
- 15: erster Anschluss
- 16: zweiter Anschluss
- 17: Gehäuse
- 18: Pumpe
- 19: Stromkabel
- 20: Motor
- 21: Netzwerkrouter
- 100: Kommunikationssystem

## Patentansprüche

1. Verfahren zum gekoppelten Betrieb einer elektrischen Waschbürste (3), die mittels eines ersten Akkupacks (1) elektrisch betreibbar und mit Waschflüssigkeit versorgbar ist, und einer elektrischen Pumpenvorrichtung (4) zur Versorgung der elektrischen Waschbürste (3) mit der Waschflüssigkeit, wobei die elektrische Pumpenvorrichtung (4) mittels eines zweiten Akkupacks (2) elektrisch betreibbar ist, umfassend die Schritte:
- Automatisches Detektieren einer Aktivierung oder Änderung eines aktiven Betriebes der elektrischen Waschbürste (3); und
a) Senden eines Aktivierungssignals abhängig von der detektierten Aktivierung oder der detektierten Änderung von dem ersten Akkupack (1) und Empfangen des Aktivierungssignals durch das zweite Akkupack (2); oder
b) Senden eines Aktivierungssignals abhängig von der detektierten Aktivierung oder der detektierten Änderung von dem ersten Akkupack (1) und Empfangen des Aktivierungssignals durch die elektrische Pumpenvorrichtung (4); oder
c) Senden eines Aktivierungssignals abhängig von der detektierten Aktivierung oder der detektierten Änderung von der elektrischen Waschbürste (3) und Empfangen des Aktivierungssignals durch das zweite Akkupack (2);
und
- Automatisches Aktivieren oder automatisches Ändern eines aktiven Betriebes der elektrischen Pumpenvorrichtung (4) abhängig von dem empfangenen Aktivierungssignal.

2. Verfahren nach Anspruch 1, wobei das Aktivierungssignal Informationen über die elektrische Waschbürste (3) und/oder Informationen über den ersten Akkupack (1) enthält.

3. Verfahren nach Anspruch 2, wobei basierend auf den Informationen über die elektrische Waschbürste (3) und/oder Informationen über den ersten Akkupack (1) des empfangenen Aktivierungssignals ein Zuordnungskriterium überprüft wird, ob das erste Akkupack (1) und/oder die elektrische Waschbürste (3) dem zweiten Akkupack (2) und/oder der elektrischen Pumpvorrichtung (4) zugeordnet ist.

4. Verfahren nach Anspruch 3, wobei der aktive Betrieb der elektrischen Pumpenvorrichtung (4) nur dann aktiviert oder geändert wird, wenn als Ergebnis der Überprüfung festgestellt wird, dass das Zuordnungskriterium erfüllt ist.

5. Verfahren nach Anspruch 1 oder 2, wobei der aktive Betrieb der Pumpenvorrichtung (4) nur dann aktiviert oder geändert wird, wenn
- das erste Akkupack (1) durch eine signaltechnische Kopplung mit dem zweiten Akkupack (2) und/oder der elektrischen Pumpenvorrichtung (4) zugeordnet ist; oder
- die elektrische Waschbürste (3) durch eine signaltechnische Kopplung mit dem zweiten Akkupack (2) und/oder der elektrischen Pumpenvorrichtung (4) zugeordnet ist.

6. Verfahren nach einem der vorherigen Ansprüche, wobei das Aktivierungssignal über eine drahtlose und direkte Kommunikationsverbindung an das zweite Akkupack (2) oder die elektrische Pumpenvorrichtung (4) gesendet wird.

7. Verfahren nach einem der Ansprüche 1 bis 5, wobei das Aktivierungssignal über eine drahtlose und indirekte Kommunikationsverbindung an das zweite Akkupack (2) oder die elektrische Pumpenvorrichtung (4) gesendet wird, wobei die indirekte Kommunikationsverbindung über ein lokales Netzwerk (5) oder eine externe Servercomputereinheit (6) hergestellt wird.

8. Verfahren nach einem der vorhergehenden Ansprüche, wobei die Aktivierung oder die Änderung des aktiven Betriebes der elektrischen Waschbürste (3) durch eine Benutzereingabe initiiert wird.

9. Verfahren nach einem der vorhergehenden Ansprüche, wobei eine Deaktivierung des aktiven Betriebes der elektrischen Waschbürste (3) automatisch erfasst wird und ein Deaktivierungssignal abhängig von der detektierten Deaktivierung von dem ersten Akkupack (1) oder von der elektrischen Waschbürste (3) gesendet wird, wobei das zweite Akkupack (2) oder die elektrische Pumpenvorrichtung (4) das Deaktivierungssignal empfängt und abhängig von dem empfangenen Deaktivierungssignal den aktiven Betrieb der elektrischen Pumpenvorrichtung (3) nach einer vorgebbaren Zeitspanne automatisch deaktiviert.

10. Verfahren nach einem der Ansprüche 4 oder 5, wobei das zweite Akkupack (2) oder die elektrische Pumpenvorrichtung (4) an das zugeordnete erste Akkupack (1) oder die zugeordnete Waschbürste (3) ein Statussignal abhängig von einem Status des zweiten Akkupacks (2) und/oder der elektrischen Pumpenvorrichtung (4) sendet.

11. Kommunikationssystem (100), das dazu eingerichtet ist, eine elektrische Waschbürste (3), die mittels eines ersten Akkupacks (1) elektrisch betreibbar und mit Waschflüssigkeit versorgbar ist, und eine elektrische Pumpenvorrichtung (4) zur Versorgung der elektrischen Waschbürste (3) mit der Waschflüssigkeit, wobei die elektrische Pumpenvorrichtung (4) mittels eines zweiten Akkupacks (2) elektrisch betreibbar ist, gekoppelt zu betreiben, das Kommunikationssystem (100) aufweisend
- einen Sensorschaltkreis (7) für das erste Akkupack (1) oder für die elektrische Waschbürste (3), der dazu eingerichtet ist, eine Aktivierung oder Änderung eines aktiven Betriebes der elektrischen Waschbürste (3) automatisch zu detektieren; und
a) eine erste Kommunikationsschnittstelle (8) für das erste Akkupack (1), wobei die erste Kommunikationsschnittstelle (8) mit dem Sensorschaltkreis (7) verbunden und dazu eingerichtet ist, abhängig von einer Detektion der Aktivierung oder Änderung ein Aktivierungssignal zu senden und eine zweite Kommunikationsschnittstelle (10) für das zweite Akkupack (2), wobei die zweite Kommunikationsschnittstelle (10) dazu eingerichtet ist, das Aktivierungssignal zu empfangen; oder
b) eine erste Kommunikationsschnittstelle (8) für das erste Akkupack (1), wobei die erste Kommunikationsschnittstelle (8) mit dem Sensorschaltkreis (7) verbunden und dazu eingerichtet ist, abhängig von einer Detektion der Aktivierung oder Änderung ein Aktivierungssignal zu senden und eine zweite Kommunikationsschnittstelle (10) für die elektrische Pumpenvorrichtung (4), wobei die zweite Kommunikationsschnittstelle (10) dazu eingerichtet ist, das Aktivierungssignal zu empfangen; oder
c) eine erste Kommunikationsschnittstelle (8) für die elektrische Waschbürste (3), wobei die erste Kommunikationsschnittstelle (8) mit dem Sensorschaltkreis (7) verbunden und dazu eingerichtet ist, abhängig von einer Detektion der Aktivierung oder Änderung ein Aktivierungssignal zu senden und eine zweite Kommunikationsschnittstelle (10) für das zweite Akkupack (2), wobei die zweite Kommunikationsschnittstelle (10) dazu eingerichtet ist, das Aktivierungssignal zu empfangen; und
- eine Steuereinheit (12) für das zweite Akkupack (2) oder für die elektrische Pumpenvorrichtung (4), die dazu eingerichtet ist, einen aktiven Betrieb der elektrischen Pumpenvorrichtung (4) abhängig von dem empfangenen Aktivierungssignal automatisch zu aktivieren oder automatisch zu ändern.

12. Kommunikationssystem (100) nach Anspruch 11, wobei die zweite Kommunikationsschnittstelle (10) dazu eingerichtet ist, das Aktivierungssignal direkt von der ersten Kommunikationsschnittstelle (8) zu empfangen.

13. Kommunikationssystem (100) nach Anspruch 11, aufweisend einen lokalen Netzwerkrouter (21) oder eine Servercomputereinheit (6), wobei der lokale Netzwerkrouter (21) oder die Servercomputereinheit (6) dazu eingerichtet ist, das Aktivierungssignal von der ersten Kommunikationsschnittstelle (8) zu empfangen, und das Aktivierungssignal an die zweite Kommunikationsschnittstelle (10) zu senden.

14. Kommunikationssystem (100) nach einem der Ansprüche 11 bis 13, aufweisend eine erste Speichereinheit (13) für das erste Akkupack (1) oder für die elektrische Waschbürste (3), die Informationen über den ersten Akkupack (1) und/oder die elektrische Waschbürste (3) speichert.

15. Kommunikationssystem (100) nach einem der Ansprüche 11 bis 14, aufweisend eine zweite Speichereinheit (13) für das zweite Akkupack (2) oder für die elektrische Pumpeneinrichtung (4), wobei die zweite Speichereinheit (13) Informationen über den ersten Akkupack (1) und/oder die elektrische Waschbürste (3) speichert.

## Claims

1. A method for the coupled operation of an electric scrubbing brush (3), which is electrically operable by a first battery pack (1) and capable of being supplied with scrubbing liquid, and an electric pump device (4) for supplying the electric scrubbing brush (3) with the scrubbing liquid, wherein the electric pump device (4) is electrically operable by a second battery pack (2), comprising the steps:
- automatically detecting an activation or change of an active operation of the electric scrubbing brush (3); and
a) transmitting an activation signal depending on the detected activation or the detected change by the first battery pack (1) and receiving the activation signal by the second battery pack (2); or
b) transmitting an activation signal depending on the detected activation or the detected change by the first battery pack (1) and receiving the activation signal by the electric pump device (4); or
c) transmitting an activation signal depending on the detected activation or the detected change by the electric scrubbing brush (3) and receiving the activation signal by the second battery pack (2); and
- automatically activating or automatically changing an active operation of the electric pump device (4) depending on the received activation signal.

2. The method according to claim 1, wherein the activation signal includes information about the electric scrubbing brush (3) and/or information about the first battery pack (1).

3. The method according to claim 2, wherein an association criterion is examined based on the information about the electric scrubbing brush (3) and/or information about the first battery pack (1) of the received activation signal to the effect if the first battery pack (1) and/or the electric scrubbing brush (3) are associated with the second battery pack (2) and/or the electric pump device (4).

4. The method according to claim 3, wherein the active operation of the electric pump device (4) is activated or changed only if it is determined as a result of the examination that the association criterion is satisfied.

5. The method according to claim 1 or 2, wherein the active operation of the pump device (4) is only activated or changed if
- the first battery pack (1) is associated with the second battery pack (2) and/or the electric pump device (4) by a signal-based coupling; or
- the electric scrubbing brush (3) is associated with the second battery pack (2) and/or the electric pump device (4) by a signal-based coupling.

6. The method according to any one of the preceding claims, wherein the activation signal is transmitted to the second battery pack (2) or the electric pump device (4) via a wireless and direct communication connection.

7. The method according to any one of claims 1 to 5, wherein the activation signal is transmitted to the second battery pack (2) or the electric pump device (4) via a wireless and indirect communication connection, wherein the indirect communication connection is established via a local network (5) or an external server computer unit (6).

8. The method according to any one of the preceding claims, wherein the activation or the change of the active operation of the electric scrubbing brush (3) is initiated by a user input.

9. The method according to any one of the preceding claims, wherein a deactivation of the active operation of the electric scrubbing brush (3) is automatically captured and a deactivation signal is transmitted by the first battery pack (1) or by the electric scrubbing brush (3) depending on the detected deactivation, wherein the second battery pack (2) or the electric pump device (4) receives the deactivation signal and automatically deactivates the active operation of the electric pump device (3) after a presettable period of time depending on the received deactivation signal.

10. The method according to any one of claims 4 or 5, wherein the second battery pack (2) or the electric pump device (4) transmits a status signal to the associated first battery pack (1) or the associated scrubbing brush (3) depending on a status of the second battery pack (2) and/or the electric pump device (4).

11. A communication system (100), which is configured to operate an electric scrubbing brush (3), which is electrically operable by a first battery pack (1) and capable of being supplied with scrubbing liquid, and an electric pump device (4) for supplying the electric scrubbing brush (3) with the scrubbing liquid, wherein the electric pump device (4) is electrically operable by a second battery pack (2), in coupled manner, the communication system (100) comprising:
- a sensor circuit (7) for the first battery pack (1) or for the electric scrubbing brush (3), which is configured to automatically detect an activation or change of an active operation of the electric scrubbing brush (3); and
a) a first communication interface (8) for the first battery pack (1), wherein the first communication interface (8) is connected to the sensor circuit (7) and configured to transmit an activation signal depending on a detection of the activation or change, and a second communication interface (10) for the second battery pack (2), wherein the second communication interface (10) is configured to receive the activation signal; or
b) a first communication interface (8) for the first battery pack (1), wherein the first communication interface (8) is connected to the sensor circuit (7) and configured to transmit an activation signal depending on a detection of the activation or change, and a second communication interface (10) for the electric pump device (4), wherein the second communication interface (10) is configured to receive the activation signal; or
c) a first communication interface (8) for the electric scrubbing brush (3), wherein the first communication interface (8) is connected to the sensor circuit (7) and configured to transmit an activation signal depending on a detection of the activation or change, and a second communication interface (10) for the second battery pack (2), wherein the second communication interface (10) is configured to receive the activation signal; and
- a control unit (12) for the second battery pack (2) or for the electric pump device (4), which is configured to automatically activate or automatically change an active operation of the electric pump device (4) depending on the received activation signal.

12. The communication system (100) according to claim 11, wherein the second communication interface (10) is configured to receive the activation signal directly from the first communication interface (8).

13. The communication system (100) according to claim 11, comprising a local network router (21) or a server computer unit (6), wherein the local network router (21) or the server computer unit (6) is configured to receive the activation signal from the first communication interface (8) and to transmit the activation signal to the second communication interface (10).

14. The communication system (100) according to any one of claims 11 to 13, comprising a first storage unit (13) for the first battery pack (1) or for the electric scrubbing brush (3), which stores information about the first battery pack (1) and/or the electric scrubbing brush (3).

15. The communication system (100) according to any one of claims 11 to 14, comprising a second storage unit (13) for the second battery pack (2) or for the electric pump device (4), wherein the second storage unit (13) stores information about the first battery pack (1) and/or the electric scrubbing brush (3).

## Revendications

1. Procédé pour faire fonctionner de manière couplée une brosse de lavage électrique (3) pouvant fonctionner électriquement au moyen d'un premier bloc-batterie (1) et pouvant être alimentée en liquide de lavage, et un dispositif de pompe électrique (4) destiné à alimenter la brosse de lavage électrique (3) en liquide de lavage, le dispositif de pompe électrique (4) pouvant fonctionner électriquement au moyen d'un second bloc-batterie (2), comprenant les étapes suivantes :
- détection automatique d'une activation ou d'une modification d'un fonctionnement actif de la brosse de lavage électrique (3) ; et
a) transmission d'un signal d'activation en fonction de l'activation détectée ou de la modification détectée à partir du premier bloc-batterie (1) et réception du signal d'activation par le second bloc-batterie (2) ; ou
b) transmission d'un signal d'activation en fonction de l'activation détectée ou de la modification détectée à partir du premier bloc-batterie (1) et réception du signal d'activation par le dispositif de pompe électrique (4) ; ou
c) transmission d'un signal d'activation en fonction de l'activation détectée ou de la modification détectée à partir de la brosse de lavage électrique (3) et réception du signal d'activation par le second bloc-batterie (2) ; et
- activation automatique ou modification automatique du fonctionnement actif du dispositif de pompe électrique (4) en fonction du signal d'activation reçu.

2. Procédé selon la revendication 1, dans lequel le signal d'activation contient des informations concernant la brosse de lavage électrique (3) et/ou des informations concernant le premier bloc-batterie (1).

3. Procédé selon la revendication 2, dans lequel, sur la base des informations concernant la brosse de lavage électrique (3) et/ou des informations concernant le premier bloc-batterie (1) du signal d'activation reçu, un critère d'association est vérifié pour savoir si le premier bloc-batterie (1) et/ou la brosse de lavage électrique (3) est associé au second bloc-batterie (2) et/ou au dispositif de pompe électrique (4).

4. Procédé selon la revendication 3, dans lequel le fonctionnement actif du dispositif de pompe électrique (4) n'est activé ou modifié que s'il est déterminé, à la suite de la vérification, que le critère d'association est satisfait.

5. Procédé selon la revendication 1 ou 2, dans lequel le fonctionnement actif du dispositif de pompe (4) n'est activé ou modifié que si
- le premier bloc-batterie (1) est associé au second bloc-batterie (2) et/ou au dispositif de pompe électrique (4) par un couplage par échange de signaux ; ou
- la brosse de lavage électrique (3) est associée au second bloc-batterie (2) et/ou au dispositif de pompe électrique (4) par un couplage par échange de signaux.

6. Procédé selon l'une des revendications précédentes, dans lequel le signal d'activation est transmis au second bloc-batterie (2) ou au dispositif de pompe électrique (4) par l'intermédiaire d'une liaison de communication sans fil et directe.

7. Procédé selon l'une des revendications 1 à 5, dans lequel le signal d'activation est transmis au second bloc-batterie (2) ou au dispositif de pompe électrique (4) par l'intermédiaire d'une liaison de communication sans fil et indirecte, la liaison de communication indirecte étant établie par l'intermédiaire d'un réseau local (5) ou d'une unité d'ordinateur serveur externe (6).

8. Procédé selon l'une des revendications précédentes, dans lequel l'activation ou la modification du fonctionnement actif de la brosse de lavage électrique (3) est déclenchée par une entrée d'utilisateur.

9. Procédé selon l'une des revendications précédentes, dans lequel une désactivation du fonctionnement actif de la brosse de lavage électrique (3) est détectée automatiquement et un signal de désactivation est transmis par le premier bloc-batterie (1) ou par la brosse de lavage électrique (3) en fonction de la désactivation détectée, le second bloc-batterie (2) ou le dispositif de pompe électrique (4) recevant le signal de désactivation et désactivant automatiquement, après un temps prédéfinissable en fonction du signal de désactivation reçu, le fonctionnement actif du dispositif de pompe électrique (3).

10. Procédé selon l'une des revendications 4 ou 5, dans lequel le second bloc-batterie (2) ou le dispositif de pompe électrique (4) transmet au premier bloc-batterie associé (1) ou à la brosse de lavage associée (3) un signal d'état en fonction d'un état du second bloc-batterie (2) et/ou du dispositif de pompe électrique (4).

11. Système de communication (100) conçu pour faire fonctionner de manière couplée une brosse de lavage électrique (3), laquelle peut fonctionner électriquement au moyen d'un premier bloc-batterie (1) et peut être alimentée en liquide de lavage, et un dispositif de pompe électrique (4) destiné à alimenter la brosse de lavage électrique (3) en liquide de lavage, le dispositif de pompe électrique (4) pouvant fonctionner électriquement au moyen d'un second bloc-batterie (2), le système de communication (100) comportant
- un circuit de détection (7) pour le premier bloc-batterie (1) ou pour la brosse de lavage électrique (3), lequel est conçu pour détecter automatiquement une activation ou une modification d'un fonctionnement actif de la brosse de lavage électrique (3) ; et
a) une première interface de communication (8) pour le premier bloc-batterie (1), la première interface de communication (8) étant connectée au circuit de détection (7) et étant conçue pour transmettre un signal d'activation en fonction de la détection de l'activation ou de la modification, et une seconde interface de communication (10) pour le second bloc-batterie (2), la seconde interface de communication (10) étant conçue pour recevoir le signal d'activation ; ou
b) une première interface de communication (8) pour le premier bloc-batterie (1), la première interface de communication (8) étant connectée au circuit de détection (7) et étant conçue pour transmettre un signal d'activation en fonction de la détection de l'activation ou de la modification, et une seconde interface de communication (10) pour le dispositif de pompe électrique (4), la seconde interface de communication (10) étant conçue pour recevoir le signal d'activation ; ou
c) une première interface de communication (8) pour la brosse de lavage électrique (3), la première interface de communication (8) étant connectée au circuit de détection (7) et étant conçue pour transmettre un signal d'activation en fonction de la détection de l'activation ou de la modification, et une seconde interface de communication (10) pour le second bloc-batterie (2), la seconde interface de communication (10) étant conçue pour recevoir le signal d'activation ; et
- une unité de commande (12) pour le second bloc-batterie (2) ou pour le dispositif de pompe électrique (4), laquelle est conçue pour activer ou modifier automatiquement un fonctionnement actif du dispositif de pompe électrique (4) en fonction du signal d'activation reçu.

12. Système de communication (100) selon la revendication 11, dans lequel la seconde interface de communication (10) est conçue pour recevoir le signal d'activation directement de la première interface de communication (8).

13. Système de communication (100) selon la revendication 11, comportant un routeur de réseau local (21) ou une unité d'ordinateur serveur (6), le routeur de réseau local (21) ou l'unité d'ordinateur serveur (6) étant conçu pour recevoir le signal d'activation de la première interface de communication (8) et pour transmettre le signal d'activation à la seconde interface de communication (10).

14. Système de communication (100) selon l'une des revendications 11 à 13, comportant une première unité de stockage (13) pour le premier bloc-batterie (1) ou pour la brosse de lavage électrique (3), laquelle stocke des informations concernant le premier bloc-batterie (1) et/ou la brosse de lavage électrique (3).

15. Système de communication (100) selon l'une des revendications 11 à 14, comportant une seconde unité de stockage (13) pour le second bloc-batterie (2) ou pour le dispositif de pompe électrique (4), la seconde unité de stockage (13) stockant des informations concernant le premier bloc-batterie (1) et/ou la brosse de lavage électrique (3).
